(19) Europäisches Patentamt
European Patent Office
Office européen des brevets

(11) Publication number: 0 322 583 A1

# (12) EUROPEAN PATENT APPLICATION

(21) Application number: 88119964.0

(51) Int. Cl.[4]: A01N 41/04

(22) Date of filing: 30.11.88

(30) Priority: 02.12.87 IT 2285587

(43) Date of publication of application: 05.07.89 Bulletin 89/27

(84) Designated Contracting States: CH DE ES FR IT LI

(71) Applicant: S.I.P.C.A.M. S.p.A. Società Italiana Prodotti Chimici e per l'Agricoltura Milano
Viale Gian Galeazzo, 3
I-20136 Milano(IT)

(72) Inventor: Formigoni, Attilio
Via Pietro Micca, 11
I-20025 Legnano Milano(IT)

(74) Representative: Faggioni, Marco, Dr. Ing. et al
FUMERO - Studio Consulenza Brevetti
Widenmayerstrasse 4/I
D-8000 München 22(DE)

## (54) Insecticide composition.

(57) A highly effective insecticide composition can be prepared by mixing the following compounds:

a) an alkali-metal dioctyl-sulpho-succinate;

b) a salt mixture, having a buffer effect at pH 3-7 in aqueous solution; possibly adding sequestrating compounds, salts of alkaline-earth metals and of heavy metals present in water, as well as different insecticide compounds and inert substances.

EP 0 322 583 A1

# INSECTICIDE COMPOSITION

Fighting insects requires nowadays the use of increasingly active insecticide compositions having new mechanisms of action; this is due to the fact that, during the fast growth of insect populations, the insecticide treatments select strains which resist more and more to the traditional insecticide compounds.

The rising requirements of respecting the environment and protecting human health are moreover urging the use of insecticides which are non toxic for the mammalia, which are selective towards entomological fauna thus respecting the useful insects, and which are highly biodegradable in the environment.

The insecticide activity of surface-active compounds has been known for a long time; nevertheless, the use of such compounds on their own, as insecticides, has never had a real commercial development, due to the fact that their insecticide activity has always proved to be very limited.

Various surface-active substances are instead used as adjuvants to help the action of different chemical insecticides since, by lowering the surface tension of the aqueous mixtures sprayed on plants, they facilitate contact between insects and insecticides, with an increase of the biological activity of these latter.

During searches carried out by the Applicant, it has surprisingly been discovered that a special composition containing a particular surfactant possesses a very high insecticide effectiveness, much higher than the effectiveness both of the same surfactant employed on its own and of other surfactants of common use.

On the basis of this discovery and of the subsequent searches, the insecticide composition of the present invention has been conceived, said composition comprising an alkali-metal dioctyl-sulpho-succinate of formula:

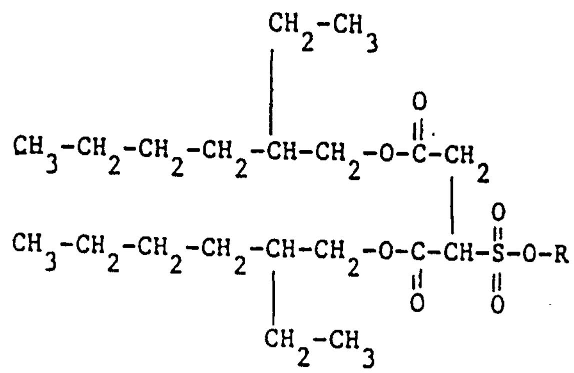

(A)

where R may be sodium, potassium or lithium, in the presence of a salt mixture, having a buffer effect at pH 3-7 in aqueous solution. Said composition develops a particularly strong insecticide action on certain species of insects harmful to agriculture, even if used in low non-toxic and non-polluting dosages and, furthermore, it has a selective action in respect of the useful insects, parassites or predators of phytophagous insects, which are not disturbed by it.

With very hard waters for the presence of salts of alkaline-earth metals or of heavy metals (eg. iron), it may be useful to further add a sequestrating compound stopping the interference of said salts.

To the insecticide composition object of the invention there may be also added other surfactants, mineral and vegetable oils, and possibly insecticide or inert substances.

Examples of salt mixtures having a buffer effect at pH 3-7 in aqueous solution can be mixtures of monobasic alkaline phosphates with bibasic alkaline phosphates, alkaline tartrates and citrates, with the possible presence of phosphates, alkaline phthalates, alkaline tetraoxalates, and various other mixtures, well known to experts in the art.

Examples of sequestrating compounds are salts of ethylendiamino-tetracetic acid, of hydroxyethylendiamino-triacetic acid, of diethylentriamino-pentacetic acid, of nitril-acetic acid, of citric or tartaric acid, and other compounds.

Examples of other surfactants, which may be added to the insecticide composition according to the invention, are cited in the publication "Mc Cutcheon's - Detergents & Emulsifiers - North American and International Edition - 1986 Annual - Glen Rock, New Jersey, USA".

Examples of insecticide substances, which may be added to the composition according to the invention, are various phosphoric esters, insecticide carbamates, insecticide chlorinated compounds, natural and

synthesis pyrethroids, insecticide alkaloids, and different compounds as Amitraz, Cartap, Avermectin, and others.

The insecticide composition according to the invention may be prepared in water-soluble powder form or as a concentrated aqueous solution or suspension, and may contain from 1% to 50% and more of the alkali-metal dioctyl-sulpho-succinate, according to the salt mixture with buffer effect used and to the respective pH selected.

The expert of the art is perfectly acquainted with the most suited techniques to formulate water-soluble powders (eg. with the addition of colloidal silica as anti-caking, or of anti-foam silicones), or even concentrated aqueous solutions or suspensions (eg. with hydrophile polymers having a suspending action, with anti-mold, anti-freeze and anti-foam compounds, etc.).

The dosages of use of the alkali-metal dioctyl-sulpho-succinate, in the insecticide composition object of the invention, may vary within rather broad limits according to the type of insects having to be faught. Nevertheless, by way of indication, said dosages may be included between 0.002% and 0.2% and preferably between 0.00375% and 0.12%, of the aqueous mixtures sprayed onto the insects and cultivations by conventional equipment.

An important detail is that the insects must come directly in contact with the aqueous mixtures being sprayed, in that the action of the insecticide composition in aqueous solution is by contact, with a limited residual effect.

It will thus be up to the operators to carry out treatments on insects which are not hidden into curled up leaves or inside other shelters.

The insects which are most suited to be treated with the insecticide composition according to the invention are usually those of smaller dimensions, with limited possibilities of movement, as for instance Pear Psyllid (Psylla piri) at the larval and nymphal stages, or young larvae of other Hemipterons.

The following examples allow to illustrate the invention more clearly, without however limiting the same

## EXAMPLE 1

In a powder mixer, the compounds specified hereunder - all of them already in fine powder form - are mixed together; if any coarse powders or crumbs are present, the whole will have to be ground into a suitable mill:

| | |
|---|---|
| Sodium dioctyl-sulpho-succinate 90% | 11.1 Kg |
| Monobasic potassium phosphate | 65.5 Kg |
| Bibasic sodium phosphate | 15.0 Kg |
| Sodium ethylendiamino-tetracetate | 4.5 Kg |
| Colloidal silica | 3.9 Kg |
| | 100.0 Kg |

One obtains a composition having buffered pH around 6. 5, which is very effective by contact against various species of insects.

## EXAMPLE 2

Insecticide tests are carried out in a lab by putting drops of aqueous solutions of the insecticide composition according to the present invention and of other compositions based on different surface-active substances, onto larvae and nymphae of Psylla piri, observing the mortality thereof at different times. In each test, untreated check-insects are always left for comparison.

Table 1 reports the average mortality percentages of groups of 20 Psylla piri larvae on leaves of William variety pear trees, as compared to groups of the same insects which have not been treated

Table 1 shows how the insecticide composition according to tne invention has, at the same dosages, a much stronger effectiveness compared to that of surface-active substances used on their own.

TABLE 1

Mortality percentage of Psylla piri larvae and nymphae into drops of aqueous solutions of compositions based on surface-active substances, observed at different times (10 seconds, 1 minute, 1 hour).

| Insecticide Compositions | Dosage % in water | Mortality % | | | | | |
|---|---|---|---|---|---|---|---|
| | | Larvae | | | Nymphae | | |
| | | 10" | 1' | 1h | 10" | 1' | 1h |
| Composition of Example 1 (10% of sodium dioctyl-sulpho-succinate) | 0.6 | 100 | 100 | 100 | 100 | 100 | 100 |
| | 0.3 | 50 | 100 | 100 | 40 | 100 | 100 |
| | 0.15 | 20 | 80 | 100 | 10 | 60 | 100 |
| | 0.075 | 0 | 20 | 60 | 0 | 0 | 50 |
| | 0.0375 | 0 | 0 | 20 | 0 | 0 | 10 |
| Sodium dioctyl-sulpho-succinate 90% | 0.066 | 80 | 90 | 100 | 40 | 60 | 100 |
| | 0.033 | 40 | 60 | 80 | 20 | 40 | 80 |
| | 0.0165 | 0 | 20 | 60 | 0 | 10 | 20 |
| | 0.00825 | 0 | 0 | 0 | 0 | 0 | 0 |
| | 0.00412 | 0 | 0 | 0 | 0 | 0 | 0 |
| Sodium lauryl sulphate 90% | 0.066 | 0 | 60 | 80 | 0 | 20 | 40 |
| | 0.033 | 0 | 40 | 60 | 0 | 0 | 0 |
| | 0.0165 | 0 | 0 | 0 | 0 | 0 | 0 |
| | 0.00825 | 0 | 0 | 0 | 0 | 0 | 0 |
| | 0.00412 | 0 | 0 | 0 | 0 | 0 | 0 |
| Sodium lauryl sulphonate 90% buffered at pH 4 | 0.066 | 0 | 60 | 100 | 0 | 40 | 60 |
| | 0.033 | 0 | 40 | 80 | 0 | 0 | 0 |
| | 0.0165 | 0 | 0 | 0 | 0 | 0 | 0 |
| | 0.00825 | 0 | 0 | 0 | 0 | 0 | 0 |
| | 0.00412 | 0 | 0 | 0 | 0 | 0 | 0 |
| Nonylphenol condensed with 9 moles of ethylene oxide 90% | 0.066 | 0 | 0 | 40 | 0 | 0 | 20 |
| | 0.033 | 0 | 0 | 0 | 0 | 0 | 0 |
| | 0.0165 | 0 | 0 | 0 | 0 | 0 | 0 |
| | 0.00825 | 0 | 0 | 0 | 0 | 0 | 0 |
| | 0.00412 | 0 | 0 | 0 | 0 | 0 | 0 |
| Untreated check-insect | | 0 | 0 | 0 | 0 | 0 | 0 |

EXAMPLE 3

In an orchard of 16-year old Kaiser Alexander variety pear trees, with spring infestations of Psylla piri larvae and nymphae on most of the young sprouts in growth, insecticide treatments are carried out with

high-pressure spray pumps, so as to evenly distribute over different parcels 2000 litres of aqueous mixture per hectare.

The various comparison insecticide compositions are sprayed on 3 parcels of 4 plants each, and the experiment is repeated three times casually varying the parcels concerned.

After 48 hours and after 8 days from the insecticide treatments, the results reported in Table 2 are observed.

The data reported in said Table reveals the high effectiveness of the insecticide composition according to the invention and its selectiveness in respect of Anthocoris nemorum, a useful insect for being an important predator of Psyllid. In considering the results of Table 2, one should bear in mind that the Anthocoris nemorum population has of course a higher growth (see data of untreated check-insect) in the presence of a large quantity of larvae and nymphae of Psylla piri which form its food.

TABLE 2

Results of insecticide treatments against Psylla piri larvae and nymphae, in the presence of the predatory insect Anthocoris nemorum, on Kaiser Alexander variety pear trees.

| Insecticide Compositions | Dosage % in water | % sprouts with honey-dew from Psylla larvae and nymphae after treatment | | % sprouts with larvae or adults of Anthacoris after treatment |
|---|---|---|---|---|
| | | 48 h | 8 d | 8 d |
| Composition of Example 1 | 1.2 | 5.5 | 0.3 | 1.0 |
| | 0.6 | 7.3 | 0.5 | 1.3 |
| | 0.3 | 12.0 | 2.0 | 2.1 |
| AMITRAZ 20 EC | 0.3 | 20.5 | 5.0 | 0.0 |
| Cypermethryn 10 EC | 0.2 | 13.0 | 3.0 | 0.0 |
| Untreated check-insect | | 28.3 | 42.7 | 10.3 |

## Claims

1) Insecticide composition containing the compound:

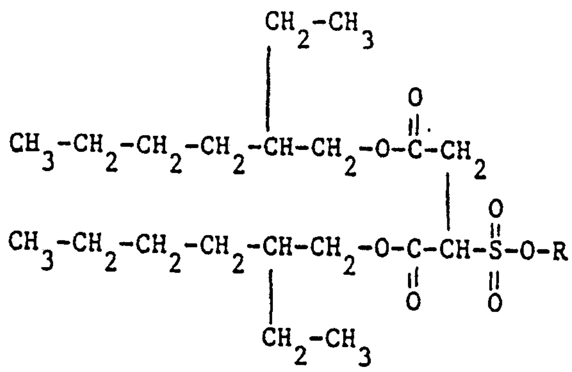

(A)

where R may be sodium, potassium or lithium, in the presence of a salt mixture, having a buffer effect at pH 3-7 in aqueous solution, with possible addition of sequestrating compounds and/or inert substances.

2) Insecticide composition as in claim 1), wherein said salt mixture with buffer effect is a phosphate buffer at pH 7.

3) Insecticide composition as in claim 1), wherein said salt mixture with buffer effect is a phosphate buffer at pH 6.5.

4) Insecticide composition as in claim 1), wherein said salt mixture with buffer effect is a phthalate buffer at pH 5.

5) Insecticide composition as in claim 1), wherein said salt mixture with buffer effect is a citrate/phosphate or tartrate/phosphate buffer at pH 4.

6) Use of an insecticide composition according to any one of claims 1) to 5), in fighting insects harmful to cultivated plants, characterized in that said composition is sprayed in an aqueous medium at a dosage of the compound of formula (A) included between 0.002% and 0.2%.

7) Use of an insecticide composition as in claim 6), wherein the dosage of the compound of formula (A) is included between 0.0375% and 0.12%.

8) Use of an insecticide composition as in claim 6) or 7), to fight Pear Psyllid and other Hemipterons.

European Patent Office

# EUROPEAN SEARCH REPORT

Application Number

EP 88 11 9964

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol. 86, no. 3, 17th January 1977, page 106, abstract no. 12707z, Columbus, Ohio, US; & JP-A-76 88 626 (TOA GOSEI CHEMICAL INDUSTRY CO., LTD) 03-08-1976<br>----- | 1-8 | A 01 N 41/04 |
| | | | TECHNICAL FIELDS SEARCHED (Int. Cl.4) |
| | | | A 01 N |

The present search report has been drawn up for all claims

| Place of search | Date of completion of the search | Examiner |
|---|---|---|
| THE HAGUE | 15-03-1989 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document